# EUROPEAN PATENT APPLICATION

(11) **EP 3 272 792 A1**
(43) Date of publication of application: **24.01.2018**
(21) Application number: 16180250.9
(22) Date of filing: 19.07.2016
(51) Int. Cl.: C08J 5/18, B32B 27/00, C08J 5/22

(54) **THIN FILMS COMPRISING PLASTICIZER-FREE POLYVINYL-CO-ACETAL**

(71) Applicant: Kuraray Europe GmbH, 65795 Hattersheim (DE)
(72) Inventor: FRANK, Michael, D-55268 Nieder-Olm (DE); STEINBACH, Niklas, 65929 Frankfurt (DE)
(74) Representative: Kisters, Michael Marcus

(57) **Abstract**

The invention is directed to a film comprising polyvinyl-co-acetal characterized in a thickness of 1 µm to 1000 µm, less than 10 whgt% of at least one plasticizer wherein the polyvinyl-co-acetal is obtained by reacting at least one polyvinyl alcohol with at least two different aliphatic keto compounds each containing 2 to 10 carbon atoms

## Description

Films comprising polyvinyl acetal are long known as adhesive layer for laminating glass, polymers or fibers. Especially plasticized polyvinyl acetal films are widely used as adhesive layer for glass-glass laminates in automotive use.

Such films contain usually between 15 and 30 % of plasticizer. For use with polycarbonate layers, plasticized films are unsuitable, since plasticizer migrates into polycarbonate which detours mechanical instability and optical properties of the polycarbonate sheet.

Plasticizer-free films from polyvinyl acetal are knows as adhesive layer for non-woven fabrics. For example WO 2013124147A1 discloses the use of plasticizer-free films containing polyvinyl butyral (PVB) for laminating layers of aromatic polyamide fibers.

It was found that films containing polyvinyl butyral (PVB) have a rather low softening temperature. When using such films for lamination purposes, long cooling is necessary to fix the desired shape of the laminate and/or to prevent delamination.

Accordingly there was a need for such films having a higher softening temperature and/or higher processing temperature during lamination processing.

Surprisingly it was found that films based on polyvinyl-co-acetals are suitable as adhesive layer and poses higher softening temperatures as the respective homo-polyvinylacetals.

Object of the invention is therefore a Film comprising polyvinyl-co-acetal characterized in a thickness of 1 µm to 1000 µm, less than 10 whgt% of at least one plasticizer wherein the polyvinyl-co-acetal is obtained by reacting at least one polyvinyl alcohol with at least two different aliphatic keto compounds each containing 1 to 10 carbon atoms.

The film according to the invention may be obtained by reacting at least one polyvinyl alcohol with a first and a second aliphatic keto compounds wherein the first aliphatic keto compound has at least one carbon atom less that the second aliphatic keto compound.

In another embodiment of the invention, the polyvinyl-co-acetal is obtained by reacting at least one polyvinyl alcohol with a first and a second aliphatic keto compounds and the ratio of the groups of the polyvinyl-co-acetal originating from the first aliphatic keto compound and the second aliphatic keto compound between 20:80 and 50:50.

In a preferred embodiment of the invention, the polyvinyl-co-acetal is obtained by reacting at least one polyvinyl alcohol with acetaldehyde as first aliphatic keto compound and (n)-and/or (iso)-butyraldehyde as second aliphatic keto compound.

The film may have a thickness between 10 and 300 µm, preferably between 30 and 250 µm, more preferably between 40 and 110 µm.

Preferably the polyvinyl-co-acetals used in this invention have a polyvinyl acetate content of 1 to 20 % by weight, particularly 1 to 10 % by weight and a polyvinyl alcohol content of 10 to 35 % by weight, preferably 11 to 27 % by weight and in particular 16 to 21% by weight.

The degree of polymerization Pw of the polyvinyl-co-acetals is preferably between 100 and 1000, particularly preferably between 100 and 800 and in particular between 100 and 500.

Suitable polyvinyl-co-acetals have a molecular weight sufficiently high to form self-supported films either by extrusion or by solvent casting process. The suitable molecular weight of the polyvinyl-co-acetals is expressed by the viscosity, ranging from 5 mPas to 3000 mPas, preferable between 5 mPas to 2500 mPas and in particular 5 to 2000 mPas, especially 20 to 200 mPas.

When producing the polyvinyl-co-acetals used in accordance with the invention, it is preferred to use a mixture of acetaldehyde with n-butyraldehyde and/or iso-butyraldehyde for acetalisation. The proportion of acetal groups in the polyvinyl-co-acetal resulting from n-butyraldehyde and/or iso-butyraldehyde should be at least 50 mol %.

The polyvinyl alcohol used to produce the polyvinyl-co-acetals can be utilized as one component or in the form of a mixture of polyvinyl alcohols having a different degree of polymerisation or degree of hydrolysis.

The polyvinyl alcohol content of the polyvinyl-co-acetals may be 10 to 25 % by weight, preferably 18 to 23 % by weight.

The film laminates or layers according to the invention are generally produced by extrusion or solvent casting. In the extrusion process certain properties, for example melt pressure, melt temperature and die temperature may be adjusted to obtain or avoid melt fracture i.e. to obtain or avoid a stochastic surface roughness.

Alternatively, a film laminate according to the invention already produced can be embossed with a generally non-stochastic roughness by an embossing process between at least one pair of rolls.

Irrespective of the production method, films according to the invention may be provided with surface structure, applied on one side or more preferably on both sides, with a roughness R_{Z} of 15 to 150 µm, preferably R_{Z} of 15 to 100 µm, more preferably R_{Z} of 20 to 80 µm, and in particular R_{Z} of 40 to 75 µm.

In another embodiment, films according to the invention have substantially no surface structure, like a roughness R_{Z} of 0 to 5 µm

The polyvinyl-co-acetal film of the present invention is manufactured by extrusion for example with a blown film extrusion line, or preferably by a cast extrusion process using a flat film die and chill roll since then the shrinkage values are very low. Processing temperatures for the extrusion line are between 200 and 250 °C, preferably between 240 and 250 °C. The flat film die is heated between 250 and 280 °C, preferably between 260 and 275 °C.

The polyvinyl acetal films may contain up to 2 wgt% preferable less than 1wt % additives, especially less than 0.5 % wgt % additives.

As additives, inorganic fillers such as pigments, dyes or clays, UV stabilizers, oxidation stabilizers or water may be employed.

Suitable UV stabilizer may be amine based, for example tetramethyl piperidine. Next to primary, secondary and tertiary linear amines sterically hindered amines known as 'HALS' products may be employed as co-stabilizer in connection with polynuclear phenolic compounds.

As inorganic fillers, SiO₂, optionally doped with Al₂O₃ or ZrO₂ can be added.

Films according to the invention may comprise up to 10% by weight plasticiser, for example one or more of the following plasticisers: water, di-2-ethylhexyl sebacate (DOS), di-2-ethylhexyl adipate (DOA), dihexyl adipate (DHA), dibutyl sebacate (DBS), triethylene glycol-bis-n heptanoate (3G7), tetraethylene glycol-bis-n-heptanoate (4G7), triethylene glycol-bis-2-ethyl hexanoate (3GO or 3G8), tetraethylene glycol-bis-n-2-ethyl hexanoate (4GO or 4G8), di-2-butoxyethyl adipate (DBEA), di-2-butoxyethoxyethyl adipate (DBEEA), di-2-butoxyethyl sebacate (DBES), di-2-ethylhexyl phthalate (DOP), di-isononyl phthalate (DINP), triethylene glycol-bis-isononanoate, triethylene glycol-bis-2-propyl hexanoate, 1,2-cyclohexane dicarboxylic acid diisononyl ester (DINCH), tris(2-ethylhexyl) phosphate (TOF) and dipropylene glycol benzoate.

Preferable, films according to the invention comprise less than 5% by weight plasticiser, less than 2% by weight and most preferred no (0%) plasticizer.

### Industrial applicability

Film according to the invention can be used as hot melt, especially for fabrics.

### Examples

Two films of 50 µm thickness were prepared by solvent casting of two different polyvinyl acetals. Polyvinyl acetal A was prepared using only butyraldehyde, polyvinyl acetal B was obtained by acetalisation of polyvinyl alcohol with a 50:50 mixture by weight of acetyldehyde and butyraldehyde.

| Polymer | Hydroxyl Content | Acetyl Content | Viscosity |
|---|---|---|---|
| Acetal A | 19,2 wt.% | 1,3 wt.% | 205 mPa*s |
| Acetal B | 19,6 wt.% | 1,5 wt.% | 200 mPa*s |

A fibre composite was prepared by stacking sheets of the polymer film and woven fabrics of Vectran 1670 dtex liquid crystal polymer fibre (available from Kuraray Europe GmbH, Hattersheim) with the following stacking scheme:
Fabric / Polymer film / Fabric / Polymer film / Fabric / Polymer film / Fabric / Polymer film / Fabric.

The stack was pressed at 120 °C and 10 bar pressure in a heated press. For polyvinyl acetal A, the composite had to be cooled to 70 °C to be removed without distortions of the composite whereas composites based on polyvinyl acetal B had to be cooled only to 90°C.

With a cooling and heating rate of 10 K/min, this resulted in a 4 minutes shorter production cycle of composites based on polyvinyl acetal B compared to those based on polyvinyl acetal A (2 minutes shorter cooling and 2 minutes shorter reheating the press for the next cycle.

## Claims

1. Film comprising polyvinyl-co-acetal **characterized in** a thickness of 1 µm to 1000 µm, less than 10 whgt% of at least one plasticizer wherein the polyvinyl-co-acetal is obtained by reacting at least one polyvinyl alcohol with at least two different aliphatic keto compounds each containing 2 to 10 carbon atoms.

2. Film according to claim 1 **characterized in that** polyvinyl-co-acetal is obtained by reacting at least one polyvinyl alcohol with a first and a second aliphatic keto compounds wherein the first aliphatic keto compound has at least one carbon atom less that the second aliphatic keto compound.

3. Film according to claim 1 **characterized in that** polyvinyl-co-acetal is obtained by reacting at least one polyvinyl alcohol with a first and a second aliphatic keto compounds and the ratio of the groups of the polyvinyl-co-acetal originating from the first aliphatic keto compound and the second aliphatic keto compound is between 50:50 and 20:80.

4. Film according to claim 1 **characterized in that** polyvinyl-co-acetal is obtained by reacting at least one polyvinyl alcohol with acetaldehyde as first aliphatic keto compound and (n)- and/or (iso)-butyraldehyde as second aliphatic keto compound.

5. Film according to claim 1 **characterized in that** polyvinyl-co-acetal has a content of vinylacetate groups between 0,1 and 25 wt.-%.

6. Film according to claim 1 **characterized in that** polyvinyl-co-acetal has a molecular weight mw of 20000 - 150000 g/mol.

7. Film according to claim 1 **characterized in that** polyvinyl-co-acetal has a combined degree of acetalization of 60 - 89 wt.-%.

8. Film according to claim 1 **characterized in that** polyvinyl-co-acetal has a content of vinylalcohol groups of 10 - 30 wt.-%.

9. Film according to claim 1 **characterized in that** the film contains no plasticizer.

10. Use of the film according to claim 1 as hot melt.
